# EUROPEAN PATENT APPLICATION

(11) **EP 4 691 995 A1**
(43) Date of publication of application: **11.02.2026**
(21) Application number: 24787043.9
(22) Date of filing: 23.08.2024
(51) Int. Cl.: C01G 49/00, C01B 25/45, H01M 4/58, H01M 10/0525

(54) **MANGANESE IRON PHOSPHATE PRECURSOR, PREPARATION METHOD THEREFOR, POSITIVE ELECTRODE MATERIAL, ELECTRODE SHEET AND BATTERY**

(30) Priority: 05.06.2024 CN 202410726392
(71) Applicant: Hubei Wanrun New Energy Technology Co., Ltd., Shiyan, Hubei 442500 (CN); Lubei Wanrun Intelligent Energy Technology (Shandong) Co., Ltd, Binzhou, Shandong 251909 (CN)
(72) Inventor: LIU, Shiqi, Shiyan, Hubei 442500 (CN); SU, Xin, Shiyan, Hubei 442500 (CN); NIU, Sicheng, Shiyan, Hubei 442500 (CN); YANG, Jiaojiao, Shiyan, Hubei 442500 (CN); GAO, Kai, Shiyan, Hubei 442500 (CN); JIANG, Xuelin, Shiyan, Hubei 442500 (CN); XU, Sen, Shiyan, Hubei 442500 (CN); HUANG, Zixuan, Shiyan, Hubei 442500 (CN); YU, Zhihao, Shiyan, Hubei 442500 (CN); WANG, Qin, Shiyan, Hubei 442500 (CN)
(74) Representative: Michalski Hüttermann & Partner Patentanwälte mbB
(86) International application number: PCT/CN2024/114291
(87) International publication number: WO 2025/251433

(57) **Abstract**

The present application relates to a manganese iron phosphate precursor and a preparation method therefor, a cathode material, an electrode plate, and a battery. The manganese iron phosphate precursor is represented by a formula of (NH₄)_{(3-2x-2y)}FeₓMn_{y}PO₄·H₂O, wherein 0<x<1 and 0<y<1. The manganese iron phosphate precursor has an average particle size of 2.0 µm to 2.5 µm, a D50 particle size of 1.6 µm to 2.0 µm, and a span of 0.4 to 0.7.

## Description

### CROSS-REFERENCE TO RELATED APPLICATIONS

This application claims priority to Chinese patent application No. 2024107263923, filed on June 05, 2024, entitled "PRECURSOR OF LITHIUM MANGANESE IRON PHOSPHATE CATHODE MATERIAL AND PREPARATION METHOD THEREFOR, AND CATHODE MATERIAL", the content of which is hereby incorporated in its entirety by reference.

### TECHNICAL FIELD

The present application relates to the technical field of battery materials, particularly relates to a manganese iron phosphate precursor and a preparation method therefor, a cathode material, an electrode plate, and a battery.

### BACKGROUND

The large-scale use of traditional fossil fuels has led to increasing resource shortages and environmental pollution. Consequently, accelerating the transformation of the energy structure has become an important goal. A key initiative to achieve this goal is the development of energy storage devices that are highly efficient, have high energy density, and are low-cost, particularly to support the electrification of automobiles.

Currently, lithium iron phosphate (LFP) and lithium manganese iron phosphate (LMFP) with an olivine structure have attracted significant market attention due to their advantages of high safety, good electrochemical property, and relatively low cost. Among these, LMFP, as an upgraded alternative to LFP, offers a higher energy density and a higher voltage platform than LFP. Additionally, the cost of manganese as a raw material is low, making LMFP more price-competitive. Furthermore, compared to another ternary material, LMFP has a long cycle life, a good thermal stability, a high safety, and no explosion risk.

The preparation method for LMFP is similar to that of LFP, with commonly used preparation method including a solid-phase method, a sol-gel method, a hydrothermal method, and a co-precipitation method. The co-precipitation method for preparing LMFP typically involves the following steps: the manganese and iron sources are firstly mixed and added with a precipitant and a complexant and etc., to perform a co-precipitation reaction to obtain a precipitate; the precipitate is then washed and dried to obtain a precursor; the precursor is finally mixed and calcined with a lithium source to obtain a LMFP cathode material. This method includes two main steps: liquid-phase co-precipitation (involving crystal nucleation and growth) and high-temperature calcination. The morphological characteristics and structural properties of the precursor and the cathode material ultimately influence the electrochemical property of the cathode material. The advantages of this method include simple operation, low equipment requirement, and short reaction time, making it suitable for large-scale production. However, technical challenges remain, particularly in how to regulating the operating conditions during the co-precipitation preparation to ensure that the two metal ions, Fe and Mn ions, mix at the atomic or molecular level, which is crucial for obtaining a manganese iron phosphate precursor with an orderly and uniform morphology and an excellent performance, which in turn leads to a high-performance LMFP cathode material.

Therefore, there is an urgent need for a preparation method that can produce a manganese iron phosphate precursor with an orderly and uniform morphology and an excellent performance.

### SUMMARY

In view of the above, a manganese iron phosphate precursor and a preparation method therefor, a cathode material, an electrode plate, and a battery are provided according to various embodiments of the present application. The technical solutions are described as follows.

In a first aspect, an embodiment of the present application provides a manganese iron phosphate precursor, which is represented by a formula of (NH₄)_{(3-2x-2y)}FeₓMn_{y}PO₄·H₂O, wherein 0<x<1 and 0<y<1. The manganese iron phosphate precursor has an average particle size of 2.0 µm to 2.5 µm, a D50 particle size of 1.6 µm to 2.0 µm, and a span of 0.4 to 0.7.

In some embodiments, the manganese iron phosphate precursor includes a plurality of primary particles having an olivine morphology. A ratio of a length to a width of the manganese iron phosphate precursor is (2 to 2.5):(1 to 1.5).

In some embodiments, the manganese iron phosphate precursor has a compacted density of 1.4 g/cm³ to 1.8 g/cm³ and a specific surface area of 25 m²/g to 30 m²/g.

In a second aspect, an embodiment of the present application provides a preparation method for a manganese iron phosphate precursor, which includes:
providing a first mixture solution, a second mixture solution, a precipitant solution, and a buffer base solution; and
simultaneously adding the first mixture solution, the second mixture solution, and the precipitant solution into the buffer base solution to perform a co-precipitation reaction, an aging treatment, a washing treatment, and a drying treatment to prepare the manganese iron phosphate precursor.

A pH value of the co-precipitation reaction is greater than 3.5 and less than 5.

The first mixture solution contains a ferrous salt, a manganese salt, and a first complexant.

The second mixture solution contains a second complexant and a first precipitant.

The precipitant solution contains a second precipitant.

The buffer base solution contains a third precipitant and a third complexant.

The first complexant and the second complexant are different from each other.

The third complexant includes the first complexant, the second complexant, or a combination thereof.

In some embodiments, the ferrous salt includes ferrous sulfate, ferrous nitrate, ferrous oxalate, ferrous chloride, or a combination thereof.

In some embodiments, the manganese salt includes manganese sulfate, manganese nitrate, manganese acetate, manganese oxalate, manganese chloride, or a combination thereof.

In some embodiments, the first complexant includes citric acid, sodium citrate, ascorbic acid, lactic acid, malic acid, or a combination thereof.

In some embodiments, the second complexant includes ammonium hydroxide, ethylenediaminetetraacetic acid, diisopropylaminotetraacetic acid, tris(2-aminoethyl)triacetic acid, or a combination thereof.

In some embodiments, the third complexant includes citric acid, sodium citrate, ammonium hydroxide, ascorbic acid, lactic acid, malic acid, or a combination thereof.

In some embodiments, the first precipitant, the second precipitant, and the third precipitant each independently include phosphoric acid, diammonium hydrogen phosphate, ammonium dihydrogen phosphate, ammonium phosphate, or a combination thereof.

In some embodiments, a total concentration of the manganese ions and the ferrous ions is 10 g/L to 120 g/L.

In some embodiments, a molar ratio of the ferrous ions to the manganese ions is 1:(0.01 to 100).

In some embodiments, a concentration of the first complexant is 2 g/L to 10 g/L.

In some embodiments, a concentration of the second complexant is 5 g/L to 120 g/L.

In some embodiments, a mass ratio of the second complexant to the first precipitant is 1:(0.2 to 0.6).

In some embodiments, a concentration of the second precipitant in the precipitant solution is 10 g/L to 120 g/L.

In some embodiments, a concentration of the third complexant is 2 g/L to 10 g/L.

In some embodiments, a concentration of the third precipitant is 6 g/L to 80 g/L.

In some embodiments, a molar ratio of the third complexant to the third precipitant is 1:(1 to 8).

In some embodiments, a pH value of the buffer base solution is 2 to 6.

In some embodiments, a volume ratio of the first mixture solution, the second mixture solution, the second mixture solution, and the buffer base solution is (1 to 3) : (2 to 9) : (2 to 9) : 1.

In some embodiments, the co-precipitation reaction is performed at a temperature of 50°C to 60°C for a time period of 2 h to 24 h.

In some embodiments, the aging treatment is performed at a temperature of 50°C to 60°C for a time period of 1 h to 6 h.

In a third aspect, an embodiment of the present application provides a lithium manganese iron phosphate cathode material, which is represented by a formula of LiFeₓMn₁₋ₓPO₄/C, wherein 0<x<1. The lithium manganese iron phosphate cathode material has an average particle size of 1.5 µm to 1.7 µm, a D50 particle size of 1.5 µm to 1.7 µm, and a span of 1.9 to 2.3.

In some embodiments, the lithium manganese iron phosphate cathode material includes a plurality of primary particles in an irregular spherical morphology;

In some embodiments, the lithium manganese iron phosphate cathode material has a compacted density of 2.0 g/cm³ to 2.2 g/cm³.

In some embodiments, the lithium manganese iron phosphate cathode material has a specific surface area of 12 m²/g to 23 m²/g.

In a fourth aspect, an embodiment of the present application provides a cathode plate, which includes the lithium manganese iron phosphate cathode material provided in the third aspect of the present application.

In a fifth aspect, an embodiment of the present application provides a secondary battery, which includes the cathode plate provided in the fourth aspect of the present application.

Details of one or more embodiments of the present application are set forth in the following description. The further features, objects, and advantages of the present application will become apparent from the specification and the claims thereof.

### BRIEF DESCRIPTION OF THE DRAWINGS

In order to illustrate the technical solutions in the embodiments of the present application or in the conventional art more clearly, the drawings used in the description of the embodiments or the conventional art will be described briefly. It is evident that the following described figures are merely for some embodiments of the present application, and other figures can be derived from the disclosed figures by those of ordinary skill in the art without any creative effort.
FIG. 1 shows a flow chart of an implementation manner of a preparation method for a manganese iron phosphate precursor according to embodiments of the present application;
FIG. 2 shows a scanning electron microscope (SEM) morphology result of the manganese iron phosphate precursor obtained in Example 1 of the present application;
FIG. 3 shows a scanning electron microscope (SEM) morphology result of the manganese iron phosphate precursor obtained in Example 4 of the present application;
FIG. 4 shows a scanning electron microscope (SEM) morphology result of the manganese iron phosphate precursor obtained in Comparative Example 1 of the present application;
FIG. 5 shows a scanning electron microscope (SEM) morphology result of the manganese iron phosphate precursor obtained in Comparative Example 7 of the present application;
FIG. 6 shows a scanning electron microscope (SEM) morphology result of the manganese iron phosphate precursor obtained in Comparative Example 8 of the present application;
FIG. 7 shows a scanning electron microscope (SEM) morphology result of the manganese iron phosphate precursor obtained in Comparative Example 9 of the present application;
FIG. 8 shows a scanning electron microscope (SEM) morphology result of the LMFP cathode material obtained in Example 1 of the present application;
FIG. 9 shows a scanning electron microscope (SEM) morphology result of the LMFP cathode material obtained in Example 4 of the present application;
FIG. 10 shows a scanning electron microscope (SEM) morphology result of the LMFP cathode material obtained in Comparative Example 1 of the present application;
FIG. 11 shows a scanning electron microscope (SEM) morphology result of the LMFP cathode material obtained in Comparative Example 7 of the present application;
FIG. 12 shows a scanning electron microscope (SEM) morphology result of the LMFP cathode material obtained in Comparative Example 8 of the present application;
FIG. 13 shows a scanning electron microscope (SEM) morphology result of the LMFP cathode material obtained in Comparative Example 9 of the present application;
FIG. 14 shows an X-ray diffraction (XRD) result of the manganese iron phosphate precursor obtained in Example 4 of the present application;
FIG. 15 shows an X-ray diffraction (XRD) result of the LMFP cathode material obtained in Example 4 of the present application;
FIG. 16 shows a rate performance of the LMFP cathode material obtained in Example 1 of the present application at 2 to 4.35 V;
FIG. 17 shows a rate performance of the LMFP cathode material obtained in Example 4 of the present application at 2 to 4.35 V;
FIG. 18 shows a rate performance at of the LMFP cathode material obtained in Comparative Example 1 of the present application 2 to 4.35 V.

### DETAILED DESCRIPTION

The technical solutions in embodiments of the present application will be clearly and completely described in the following with reference to the accompanying drawings in the embodiments of the present application. Apparently, the described embodiments are merely some rather than all of the embodiments of the present application. All other embodiments obtained by one of ordinary skill in the art based on the embodiments of the present application without creative efforts shall fall within the protection scope of the present application.

Unless otherwise defined, all technical and scientific terms used herein have the same meaning as commonly understood by one of ordinary skill in the art to which the present application belongs. The terms used herein in the specification of the present application are for the purpose of describing the embodiments only, and are not intended to limit the present application. The terms "include", "comprise", and any variations thereof in the specification and claims as well as the foregoing description of drawings in the present application are intended to cover non-exclusive inclusions.

In the description of the embodiments of the present application, the technical terms "first", "second", etc. are only used to distinguish between different objects and shall not be understood as indicating or implying the relative importance, nor as implying the quantity, particular order, or primary and secondary relation of the indicated technical features. In the description of the embodiments of the present application, unless otherwise explicitly and specifically defined, "a plurality of" means two or more.

Reference herein to "embodiment" means that a particular feature, structure, or characteristic described in connection with the embodiment can be included in at least one embodiment of the present application. This phrase appeared at various places in the specification does not necessarily refer to the same embodiment, nor are they mutually exclusive independent or alternative embodiments. It can be understood by those skilled in the art, both explicitly and implicitly, that the embodiments described in the present application may be combined with other embodiments.

In the description of the embodiments of the present application, the term "and/or" is merely a description of an association relationship of the associated objects, indicating that three kinds of relationships may exist, for example, A and/or B indicates the existence of A alone, the existence of A and B at the same time, and the existence of B alone. In addition, the character "/" used herein generally indicates that the associated objects before and after are in an "or" relationship.

In the description of the embodiments of the present application, the term "a plurality of" means two or more (including two). Likewise, "a plurality of groups" means two or more groups (including two groups), and "a plurality of plates" means two or more plates (including two plates).

### Terms

Unless otherwise stated or there is a contradiction, the terms or phrases used in the present application have the following meanings:

Particle Size: For spherical particles, the particle size refers to a diameter of the spherical particles. For non-spherical particles, such as those with an olivine morphology, the particle size typically refers to an equivalent particle size (commonly referred to as the particle size) of the non-spherical particles. The laser particle sizer measures the particle size as the equivalent diameter of the particles. The equivalent particle size of a particle is defined as the diameter of a homogeneous spherical particle that has physical characteristics similar to those of the actual particle, with this diameter representing the actual particle's size. Unless otherwise stated or there is a contradiction, the term "particle size" in the present application refers to the equivalent particle size.

Particle Size Distribution Parameter: In the particle size distribution curve of the particles, a particle size corresponding to a cumulative particle size distribution percentage of N% is known as the DN particle size. This indicates that the particles smaller than this particle size accounts for N% of the total particles, where N=0 to 100. When N=100, the D100 particle size refers to a particle size corresponding to a cumulative particle size distribution percentage of 100%. When N=50, the D50 particle size refers to a particle size corresponding to a cumulative particle size distribution percentage of 50%, representing a median particle size or a median diameter, which means that 50% of the particles are smaller than this particle size, and 50% are larger. For example, if D50 particle size is 1 mm, it means that particles smaller than 1 mm and those larger than 1 mm each account for 50% of the total particles.

Span: With the computational formula of Span = (D90 - D10) ÷ D50. A smaller span indicates a more concentrated particle size distribution of the particles, while a larger span indicates a greater variability in particle sizes of the particles and a more dispersed distribution.

The co-precipitation method is a commonly used method for preparing cathode materials, including high-performance LMFP cathode materials. The co-precipitation method for preparing LMFP typically involves the following steps: the manganese and iron sources are firstly mixed and then added with a precipitant and a complexant to perform a co-precipitation reaction; finally, the precipitate is washed, dried, and mixed and calcined with a lithium source to produce a LMFP cathode material. During the co-precipitation preparation of the lithium manganese iron phosphate, the operating conditions of the co-precipitation preparation process needs to be regulated to ensure that the two metal ions, Fe and Mn ions, mix at the atomic or molecular level, which is crucial for obtaining a manganese iron phosphate precursor with an orderly and uniform morphology and an excellent performance, which in turn leads to a high-performance LMFP cathode material.

To address the technical problems of non-uniform product morphology and poor performance of the manganese iron phosphate precursor prepared by the conventional co-precipitation method, the present application provides a manganese iron phosphate precursor and a preparation method therefor, a cathode material, an electrode plate, and a battery. The manganese iron phosphate precursor provided in the present application has the advantages of orderly morphology, uniform particle size distribution, and uniform distribution of metal elements in the crystal lattice. The manganese iron phosphate precursor is prepared by a co-precipitation method in which the addition manners of salts, precipitants, and complexants and the pH value of the reaction system in the co-precipitation process are adjusted to regulate the morphology of the precursor with an orderly morphology, a uniform particle size distribution, and a uniform distribution of metal elements within the crystal lattice. The LMFP cathode material prepared from the manganese iron phosphate precursor has a high specific capacity and a good rate performance, thereby enhancing the specific capacity and the rate performance of the cathode plate and the secondary battery.

In a first aspect, an embodiment of the present application provides a manganese iron phosphate precursor, which is represented by a formula of (NH₄)_{(3-2x-2y)}FeₓMn_{y}PO₄·H₂O, wherein 0<x<1 and 0<y<1.

The manganese iron phosphate precursor has an average particle size of 2.0 µm to 2.7 µm, a D50 particle size of 1.6 µm to 2.0 µm, and a span of 0.4 to 0.7.

The manganese iron phosphate precursor provided in the present application has the advantages of orderly morphology, uniform particle size distribution, and uniform distribution of metal elements in the crystal lattice. Compared to those manganese iron phosphate precursors with non-orderly morphology and fragmental structure, the manganese iron phosphate precursor provided in the present application has superior properties, which is conducive to the preparation of a lithium manganese iron phosphate cathode material with a higher specific discharge capacity and a higher rate performance and suitable for large-scale industrialized application.

In the present application, the value of x includes, but is not limited to, 0.01, 0.05, 0.1, 0.2, 0.3, 0.4, 0.5, 0.6, 0.7, 0.8, 0.9, 0.95, 0.99, etc., and the value of y includes, but is not limited to, 0.01, 0.05, 0.1, 0.2, 0.3, 0.4, 0.5, 0.6, 0.7, 0.8, 0.9, 0.95, 0.99, etc.

Further, in some embodiments, 0<3-2x-2y≤1, including but not limited to 0.01, 0.05, 0.1, 0.2, 0.3, 0.4, 0.5, 0.6, 0.7, 0.8, 0.9, 0.95, 1, etc.

In the present application, the average particle size of the manganese iron phosphate precursor is 2.0 µm to 2.5 µm, including but not limited to 2.0 µm, 2.1 µm, 2.2 µm, 2.3 µm, 2.4 µm, 2.5 µm, etc. In some embodiments, the average particle size of the manganese iron phosphate precursor is further preferably 2.0 µm to 2.4 µm.

In the present application, the D50 particle size of the manganese iron phosphate precursor is 1.6 µm to 2.0 µm, including but not limited to 1.6 µm, 1.7 µm, 1.8 µm, 1.9 µm, 2.0 µm, etc. In some embodiments, the D50 particle size of the manganese iron phosphate precursor is further preferably 1.7 µm to 1.9 µm.

Further, in some embodiments, the D10 particle size of the manganese iron phosphate precursor is 1.2 µm to 1.7 µm, including but not limited to 1.2 µm, 1.3 µm, 1.4 µm, 1.5 µm, 1.6 µm, 1.7 µm, etc. In some embodiments, the D10 particle size of the manganese iron phosphate precursor is further preferably 1.4 µm to 1.7 µm.

Further, in some embodiments, the D90 particle size of the manganese iron phosphate precursor is 2.2 µm to 2.8 µm, including but not limited to 2.2 µm, 2.3 µm, 2.4 µm, 2.5 µm, 2.6 µm, 2.7 µm, 2.8 µm, etc. In some embodiments, the D90 particle size of the manganese iron phosphate precursor is further preferably 2.4 µm to 2.7 µm.

In the present application, the span of the manganese iron phosphate precursor is 0.4 to 0.7, including but not limited to 0.4, 0.42, 0.45, 0.48, 0.5, 0.52, 0.55, 0.58, 0.6, 0.62, 0.65, 0.68, 0.7, etc. In some embodiments, the span of the manganese iron phosphate precursor is further preferably 0.42 to 0.67.

In the technical solutions of the embodiments of the present application, the span of the manganese iron phosphate precursor is controlled in the range of 0.4 to 0.7, so that the particle size distribution of the manganese iron phosphate precursor is highly concentrated, which is conducive to improving the processing performance of the manganese iron phosphate precursor and enhancing the performance stability of the manganese iron phosphate precursor.

Further, in some embodiments, the primary particles of the manganese iron phosphate precursor have an olivine morphology. A ratio of the length to the width of the manganese iron phosphate precursor is (2 to 2.5):(1 to 1.5), including but not limited to 2:1, 2:1.2, 2:1.5, 2.2:1, 2.2:1.2, 2.2:1.5, 2.4:1, 2.4:1.2, 2.4:1.5 , 2.5:1, 2.5:1.2, 2.5:1.5, etc.

In the technical solutions of the embodiments of the present application, the primary particles of the manganese iron phosphate precursor all exhibit a uniform and orderly olivine morphology, and the ratio of the length to the width of the manganese iron phosphate precursor is controlled in the range of (2 to 2.5):(1 to 1.5), which makes the migration path of lithium ions shorter, and facilitates the intercalation and de-intercalation of the lithium ions, thereby improving the electrochemical performance of the material.

In some embodiments, the length and the width of the manganese iron phosphate precursor can be obtained by morphological characterization with SEM.

Further, in some embodiments, the compacted density of the manganese iron phosphate precursor is 1.4 g/cm³ to 1.8 g/cm³, including but not limited to 1.4 g/cm³, 1.45 g/cm³, 1.5 g/cm³, 1.55 g/cm³, 1.6 g/cm³, 1.65 g/cm³, 1.7 g/cm³, 1.75 g/cm³, 1.8 g/cm³, etc. In some embodiments, the compacted density of the manganese iron phosphate precursor is further preferably 1.587 g/cm³ to 1.752 g/cm³.

In the technical solutions of the embodiments of the present application, the manganese iron phosphate precursor has a relatively high compacted density. On one hand, a precursor with a high compacted density has a crucial effect on the preparation of a LMFP cathode material with a high compacted density, which is conducive to improving the specific discharge capacity, the rate performance, and the energy density of a LMFP cathode material. On the other hand, the transportation capacity is increased without increasing the space occupied by the transportation, thereby improving the material transportation and feeding efficiency and saving the operation cost.

Further, in some embodiments, the specific surface area the manganese iron phosphate precursor is 25 m²/g to 30 m²/g, including but not limited to 25 m²/g, 26 m²/g, 27 m²/g, 28 m²/g, 29 m²/g, 30 m²/g, etc. In some embodiments, the specific surface area of the manganese iron phosphate precursor is further preferably 25.43 m²/g to 29.88 m²/g.

In the technical solutions of the embodiments of the present application, the manganese iron phosphate precursor has a relatively moderate specific surface area, which will neither hinder the enhancement of the compacted density due to excessive gaps between particles resulted from an excessively large specific surface area, nor affect the intercalation and de-intercalation of the lithium ions due to excessively large particle size resulted from an excessively small specific surface area.

The manganese iron phosphate precursor provided in the present application includes primary particles exhibiting an olivine morphology, and has the advantages of orderly morphology, uniform particle size distribution, and uniform distribution of metal elements in the crystal lattice. Compared to those manganese iron phosphate precursor with non-orderly morphology and fragmental structure, the manganese iron phosphate precursor provided in the present application has a smaller particle size, a moderate specific surface area, a higher compacted density, and thus a superior electrochemical property, which is conducive to the preparation of a LMFP cathode material with a higher specific discharge capacity and a higher rate performance and suitable for large-scale industrialized application.

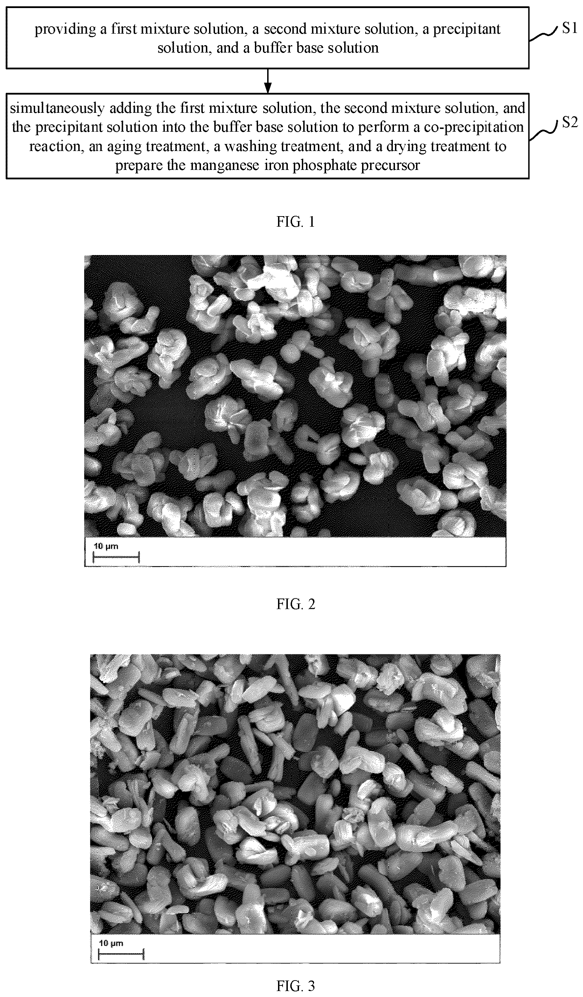

Referring to FIG. 1, in a second aspect, the embodiments of the present application provide a method for preparing the manganese iron phosphate precursor, including steps of:
S1, providing a first mixture solution, a second mixture solution, a precipitant solution, and a buffer base solution; and
S2, simultaneously adding the first mixture solution, the second mixture solution, and the precipitant solution into the buffer base solution to perform a co-precipitation reaction, an aging treatment, a washing treatment, and a drying treatment to prepare the manganese iron phosphate precursor.

A pH value of the co-precipitation reaction is greater than 3.5 and less than 5.

The first mixture solution contains a ferrous salt, a manganese salt, and a first complexant.

The second mixture solution contains a second complexant and a first precipitant.

The precipitant solution contains a second precipitant.

The buffer base solution contains a third precipitant and a third complexant.

The first complexant and the second complexant are different from each other.

The third complexant includes the first complexant, the second complexant, or a combination thereof.

In addition to the control of the conventional reaction conditions (the reaction time, the reaction temperature, and the rotation speed), the present application focuses on the match of "salt solution-complexant-precipitant" and its coordination with the pH value in the reaction process. Specifically, in the present application, the precipitation and crystallization processes of manganese and iron elements are stabilized by previously mixing the salts with a complexant; and the pH value of the reaction system is rapidly stabilized and a complexation is achieved by previously mixing different complexants with precipitants to provide the second mixture solution and the buffer base solution, respectively. As a result, the precipitation rection and mass transfer in liquid phase are performed in a steady state, and the morphology of the precipitate after the reaction is well controlled, so that the problems of uneven particle composition and morphology in the co-precipitation process are solved, and the manganese iron phosphate precursor having a uniform distribution of Ma/Fe in the crystal lattice, an orderly morphology, a uniform particle size distribution, and an excellent performance is successfully prepared. In addition, impurity ions such as metal ions, ammonium ions, and sulfate ions remaining on the surface of the aged material can be removed by washing and drying, avoiding the influence of those impurity ions on subsequent lithium content and the formation of the LMFP cathode material. In addition, the present application has the advantages of simple operation, easy control of reaction conditions, low cost, etc., and is suitable for large-scale industrialized production.

Further, in some embodiments, in step S1, the ferrous salt includes ferrous sulfate, ferrous nitrate, ferrous oxalate, ferrous chloride, or a combination thereof. The exemplary but non-limiting combination includes a combination of ferrous sulfate and ferrous nitrate, a combination of ferrous sulfate and ferrous oxalate, a combination of ferrous sulfate and ferrous chloride, and a combination of ferrous sulfate with ferrous nitrate, ferrous oxalate, and ferrous chloride.

Further, in some embodiments, in step S1, the manganese salt includes manganese sulfate, manganese nitrate, manganese acetate, manganese oxalate, manganese chloride, or a combination thereof. The exemplary but non-limiting combination includes a combination of manganese sulfate and manganese nitrate, a combination of manganese sulfate and manganese acetate, a combination of manganese sulfate and manganese oxalate, a combination of manganese sulfate and manganese chloride, a combination of manganese nitrate and manganese acetate, a combination of manganese nitrate and manganese oxalate, a combination of manganese nitrate and manganese chloride, a combination of manganese acetate and manganese oxalate, a combination of manganese acetate and manganese chloride, a combination of manganese oxalate and manganese chloride, a combination of manganese sulfate, manganese nitrate, and manganese acetate, and a combination of manganese sulfate, manganese nitrate, manganese acetate, manganese oxalate, and manganese chloride.

Further, in some embodiments, in step S1, the first complexant includes citric acid, sodium citrate, ascorbic acid, lactic acid, malic acid, or a combination thereof. The exemplary but non-limiting combination includes a combination of citric acid and sodium citrate, a combination of citric acid and ascorbic acid, a combination of citric acid and lactic acid, and a combination of citric acid and malic acid.

In the technical solutions of the embodiments of the present application, by selecting the above-described first complexant, the ferrous ions rather than the manganese ions can be preferentially complexed, thereby inhibiting the oxidation of the ferrous ions.

Further, in some embodiments, in step S1, the total concentration of manganese ions and ferrous ions in the first mixture solution is 10 g/L to 120 g/L, including but not limited to any value of or a range between any two of 10 g/L, 20 g/L, 30 g/L, 40 g/L, 50 g/L, 60 g/L, 70 g/L, 80 g/L, 90 g/L, 100 g/L, 110 g/L, and 120 g/L.

In the technical solutions of the embodiments of the present application, the co-precipitation of manganese and iron can be achieved by selecting the above-described ranges of concentrations of manganese ions and ferrous ions. If the concentration of the ions is too high, the oxidation of a part of the ferrous ions tends to occur, resulting in elemental segregation. If the concentration of the ions is too low, the precipitation efficiency will be reduced.

The molar ratio of ferrous ions to manganese ions in the first mixture solution is not limited in the present application, which can be adjusted by those skilled in the art according to the actual process. Further, in some embodiments, the molar ratio of ferrous ions to manganese ions is 1:(0.01 to 100), including but not limited to any value of or a range between any two of 1:0.01, 1:0.1, 1:1, 1:10, 1:20, 1:30, 1:40, 1:50, 1:60, 1:70, 1:80, 1:90, and 1:100.

Further, in some embodiments, in step S1, the concentration of the first complexant in the first mixture solution is 2 g/L to 10 g/L, including but not limited to any value of or a range between any two of 2 g/L, 3 g/L, 4 g/L, 5 g/L, 6 g/L, 7 g/L, 8 g/L, 9 g/L, and 10 g/L.

In the technical solutions of the embodiments of the present application, by selecting the above-described range of the concentration of the first complexant, the ferrous ions can be effectively complexed to prevent the ferrous ions from being oxidized before these ferrous ions participate in the reaction. If the concentration of the first complexant is too high, a decrease in precipitation rate of a part of the ferrous ions in the process of co-precipitation will be caused, and if the concentration of the first complexant is too low, it is not conductive to protecting the ferrous ions in the first mixture solution.

Further, in some embodiments, in step S1, the second complexant includes ammonium hydroxide, ethylenediaminetetraacetic acid (EDTA), diisopropylaminotetraacetic acid (DTPA), tris(2-aminoethyl)triacetic acid (TTHA), or a combination thereof. The exemplary but non-limiting combination includes a combination of ammonium hydroxide and EDTA, a combination of ammonium hydroxide and DTPA, and a combination of ammonium hydroxide and TTHA.

In the technical solutions of the embodiments of the present application, co-complexation of manganese and iron can be achieved by selecting the above-described second complexant.

Further, in some embodiments, in step S1, the concentration of the second complexant in the second mixture solution is 5 g/L to 20 g/L, including but not limited to 5 g/L, 7 g/L, 9 g/L, 11 g/L, 13 g/L, 15 g/L, 17 g/L, and 20 g/L. The concentration of the first precipitant in the second mixture solution is 1 g/L to 12 g/L, including but not limited to any value of or a range between any two of 1 g/L, 3 g /L, 5g/L, 7g/L, 9g/L, 12g/L.

In the technical solutions of the embodiments of the present application, effective complexation of manganese and iron ions can be achieved by selecting the above-described range of the concentration of the second complexant. If the concentration of the second complexant is too high, the rate of the precipitation reaction will be reduced. If the concentration of the second complexant is too low, it will be prone to form a non-homogeneous manganese and iron co-precipitated precursor.

Further, in some embodiments, in step S1, the mass ratio of the second complexant to the first precipitant in the second mixture is 1:(0.2 to 0.6), including but not limited to any one of 1:0.2, 1:0.3, 1:0.4, 1:0.5, and 1:0.6, or in a range between any two of those values.

In the technical solutions of the embodiments of the present application, by controlling the ratio of the second complexant to the first precipitant in the second mixture solution within the above range, the pH value in the co-precipitation reaction process can be stabilized to achieve the co-complexation and co-precipitation of manganese and iron. If the ratio is too low, the second mixture will fail to function as a pH regulator. If the ratio is too high, it will be prone to lead to the decrease in the ability of the second mixture solution to complex manganese and iron ions, which is not conducive to the homogeneous precipitation of the precursor.

Further, in some embodiments, in step S1, the concentration of the second precipitant in the precipitant solution is 10 g/L to 120 g/L, including but not limited to any one of 10 g/L, 20 g/L, 30 g/L, 40 g/L, 50 g/L, 60 g/L, 70 g/L, 80 g/L, 90 g/L, 100 g/L, 110 g/L, and 120 g/L, or in a range between any two of those values.

In the technical solutions of the embodiments of the present application, uniform nucleation of manganese and iron ions can be achieved by selecting the above-described range of the concentration of the second precipitant in the precipitant solution. If the concentration of the second precipitant is too high, the particles of the precursor will be relatively large. If the concentration of the second precipitant is too low, the rate of the co-precipitation reaction will be reduced.

Further, in some embodiments, in step S1, the third complexant includes citric acid, sodium citrate, ammonium hydroxide, ascorbic acid, lactic acid, malic acid, or a combination thereof. The exemplary but non-limiting combination includes a combination of citric acid and sodium citrate, a combination of citric acid and ascorbic acid, a combination of citric acid and lactic acid, and a combination of citric acid and malic acid.

In the technical solutions of the embodiments of the present application, the manganese and iron in the system can be rapidly complexed to prevent phase segregation by selecting the above-described third complexant.

Further, in some embodiments, in step S1, the concentration of the third complexant in the buffer base solution is 2g/L to 10g/L, including but not limited to any one of 2g/L, 3g/L, 4g/L, 5g/L, 6g/L, 7g/L, 8g/L, 9g/L, and 10g/L, or in a range between any two of those values. The concentration of the third precipitant in the buffer base solution is 6g/L to 80g/L, including but not limited to any one of 6g/L, 12g/L, 18g/L, 24g/L, 30g/L, 36g/L, 42g/L, 48g/L, 54g/L, 60g/L, 66g/L, 72g/L, 78g/L, and 80g/L, or in a range between any two of those values.

Further, in some embodiments, in step S1, the buffer base solution with a pH value of 2 to 6, including but not limited to any one of 2, 2.5, 3, 3.5, 4, 4.5, 5, 5.5, and 6, or in a range between any two of those values, is achieved by adjusting a ratio of the third precipitant to the third complexant.

In the technical solutions of the embodiments of the present application, by controlling the pH value of the buffer base solution within the above-described range, the pH value in the reaction process can be stabilized, and it is convenient to achieve the precipitation with different ratios of manganese to iron. Both too high and too low pH values of the buffer base solution will cause the crystal phase segregation.

Further, in some embodiments, in step S1, the molar ratio of the third complexant to the third precipitant in the buffer base solution is 1:(1 to 8), including but not limited to any one of 1:1, 1:3, 1:5, 1:7, and 1:8, or in a range between any two of those values.

In the technical solutions of the embodiments of the present application, by controlling the ratio of the third complexant to the third precipitant in the buffer base solution within the above-described range, the pH value required for the reaction can be previously controlled to be within a range in which the manganese and iron can be precipitated. The ratio of the third complexant to the third precipitant being too high or too low is not conducive to the rapid stabilization of the pH value in the co-precipitation reaction.

Further, in some embodiments, in step S1, the first precipitant, the second precipitant, and the third precipitant each independently includes phosphoric acid, diammonium hydrogen phosphate, ammonium dihydrogen phosphate, ammonium phosphate, or a combination thereof. The exemplary but non-limiting combination includes a combination of phosphoric acid and diammonium hydrogen phosphate, a combination of phosphoric acid and ammonium dihydrogen phosphate, a combination of phosphoric acid and diammonium hydrogen phosphate, and a combination of phosphoric acid, diammonium hydrogen phosphate, ammonium dihydrogen phosphate, and ammonium phosphate.

In the technical solutions of the embodiments of the present application, by selecting the above-described precipitant, co-precipitation of manganese and iron can be achieved, and the pH value in the reaction process can be stabilized, so that the manganese iron phosphate precursor can be obtained in the co-precipitation.

Further, in some embodiments, in step S1, the process of preparing the first mixture solution includes: dissolving the ferrous salt, the manganese salt, and the first complexant into water to prepare the first mixture solution. The process of preparing the second mixture solution includes: dissolving the second complexant and the first precipitant into water to prepare the second mixture solution. The process of preparing the precipitant solution includes: dissolving the second precipitant into water to prepare the precipitant solution. The process of preparing the buffer base solution includes: dissolving the third complexant and the third precipitant into water to prepare the buffer base solution.

In the present application, during the co-precipitation reaction in step S2, the pH value of the reaction system is greater than 3.5 and less than 5, including but not limited to 3.51, 3.55, 3.6, 3.7, 3.8, 3.9, 4, 4.1, 4.2, 4.3, 4.4, 4.5, 4.6, 4.8, 4.8, 4.9, 4.95, 4.99, etc., which is not limited in the present application.

Further, in some embodiments, during the co-precipitation reaction in step S2, the pH value of the reaction system is 4 to 4.5, including but not limited to any one of 4.0, 4.1, 4.2, 4.3, 4.4, and 4.5, or in a range between any two of those values. The fluctuating range of the pH value is controlled to be no more than ±0.01 during the reaction.

In the technical solutions of the embodiments of the present application, by controlling the pH value during the co-precipitation reaction within such range, the stable co-precipitation with manganese and iron in different ratios can be achieved. If the pH value is too low, it will lead to too much iron precipitation and too little manganese precipitation. If the pH value is too high, it will lead to too much manganese precipitation and too little iron precipitation.

Further, in some embodiments, in step S2, the temperature of the reaction system during the co-precipitation reaction is 50°C to 60°C, including but not limited to any one of 50°C, 52°C, 54°C, 56°C, 58°C, and 60°C, or in a range between any two of those values.

In the technical solutions of the embodiments of the present application, by controlling the temperature of the co-precipitation reaction within such range, the rate of co-precipitation reaction can be increased. If the temperature is too low, it will lead to a too slow reaction rate and a low degree of reaction. If the temperature is too high, it will lead to damage to the pH meter equipment and oxidation of the precursor.

In the technical solutions of the embodiments of the present application, the temperature is maintained constant and the pH value in the reactor is stabilized throughout the co-precipitation reaction to ensure that the reaction in the solution is performed sufficiently.

Further, in some embodiments, in step S2, during the co-precipitation reaction, a time period of the co-precipitation reaction is 2h to 24h, including but not limited to any one of 2h, 6h, 10h, 14h, 18h, and 24h, or in a range between any two of those values.

Further, in some embodiments, in step S2, the co-precipitation reaction is performed under stirring.

The stirring speed during the co-precipitation reaction is 200 rpm to 1000 rpm, including but not limited to any one of 200 rpm, 400 rpm, 600 rpm, 800 rpm, and 1000 rpm, or in a range between any two of those values.

In the technical solutions of the embodiments of the present application, by controlling the stirring speed during the co-precipitation reaction within such range, it is conductive to achieving uniform particle size of the precursor. If the stirring speed is too low, it will cause the particles of the precursor to be difficult to grow. If the stirring speed is too high, the structure of the secondary particles of the precursor will be destroyed.

Further, in some embodiments, in step S2, the co-precipitation reaction is performed under a protective gas.

Further, in some embodiments, the protective gas includes nitrogen, helium, neon, argon, xenon, etc.

Further, in some embodiments, in step S2, the process of simultaneously adding the first mixture solution, the second mixture solution, and the precipitant solution into the buffer base solution to perform the co-precipitation reaction includes: adding the buffer base solution to a reactor, and then concurrently injecting the first mixture solution, the second mixture solution, and the precipitant solution by a peristaltic pump into the reactor that has been preheated to the temperature of the co-precipitation reaction and is filled with the protective gas, under continuously stirring.

The "concurrently injecting" refers to that the individual solutions are started to be injected into the reactor at the same time and the injection time periods of the individual solutions are exactly the same, which ensures that each of the components participates in the reaction at any time point of the reaction and ensures the homogeneity of the components in a mixed slurry. However, in the process of concurrently injecting, the flow rates of the individual solutions may be the same or different, depending on the actual demand.

In the technical solutions of the embodiments of the present application, by adopting the above-described injection method, the feeding rate can be more precisely controlled and the pH value of the solution can be stabilized.

Further, in some embodiments, in step S2, the time period of concurrently injecting during the co-precipitation reaction is 2 h to 24 h, including but not limited to any one of 2 h, 6 h, 10 h, 14 h, 18 h, and 24 h, or in a range between any two of those values.

In the technical solutions of the embodiments of the present application, by controlling the injection time period within such range, the elemental segregation can be reduced, which is conducive to the morphology homogenization of the precursor. If the injection time period is too short (i.e., the flow rate is too fast), it will be difficult to achieve effective co-complexation of manganese and iron. If the injection time period is too long (i.e., the flow rate is too slow), the synthesis efficiency will be reduced.

Further, in some embodiments, in step S2, the flow rate of the first mixture solution during the co-precipitation reaction is 0.5 mL/min to 5 mL/min, including but not limited to any one of 0.5 mL/min, 1 mL/min, 1.5 mL/min, 2 mL/min, 2.5 mL/min, 3 mL/min, 3.5 mL/min, 4 mL/min, 4.5 mL/min, and 5mL/min, or in a range between any two of those values. The flow rate of the second mixture solution is 1 mL/min~15 mL/min, including but not limited to any one of 1 mL/min, 2 mL/min, 4 mL/min, 6 mL/min, 8 mL/min, 10 mL/min, 12 mL/min, 14 mL/min, and 15 mL/min, or in a range between any two of those values. The flow rate of the precipitant solution is 1 mL/min to 15 mL/min, including but not limited to any one of 1 mL/min, 2 mL/min, 4 mL/min, 6 mL/min, 8 mL/min, 10 mL/min, 12 mL/min, 14 mL/min, and 15 mL/min, or in a range between any two of those values.

Further, in some embodiments, in step S2, in the aging treatment, the temperature of aging is 50°C to 60°C, including but not limited to any one of 50°C, 52°C, 54°C, 56°C, 58°C, and 60°C, or in a range between any two of those values. The time period of aging is 1 h to 6 h, including but not limited to any one of 1 h, 2 h, 3 h, 4 h, 5 h, and 6 h, or in a range between any two of those values. The pH value of the reaction system is 4 to 4.5, including but not limited to any one of 4, 4.1, 4.2, 4.3, 4.4, and 4.5, or in a range between any two of those values.

Further, in some embodiments, the aging process is performed under stirring and a protective gas.

Even further, in some embodiments, the stirring speed of the aging process is 200 rpm to 1000 rpm, including but not limited to any one of 200 rpm, 400 rpm, 600 rpm, 800 rpm, and 1000 rpm, or in a range between any two of those values.

In the technical solutions of the embodiments of the present application, by controlling the stirring speed of the aging process within such range, the orderly morphology and the uniform particle size of the particles of the precursor can be achieved. If the stirring speed is too low, it is not conducive to achieving the orderly morphology of the particles. If the stirring speed is too high, it is not conducive to the aggregation and the growth of the precipitated particles.

Further, in some embodiments, the protective gas includes nitrogen, helium, neon, argon, xenon, etc.

Further, in some embodiments, the precipitate obtained at the end of aging is washed until the conductivity of the deionized water as the washing solution is 50 µS/cm to 150 µS/cm, including but not limited to any one of 50 µS/cm, 60 µS/cm, 70 µS/cm, 80 µS/cm, 90 µS/cm, 100 µS/cm, 110 µS/cm, 120 µS/cm, 130 µS/cm, 140 µS/cm, and 150 µS/cm, or in a range between any two of those values.

Further, in some embodiments, the temperature of the drying treatment is 60°C to 120°C, including but not limited to any one of 60°C, 70°C, 80°C, 90°C, 100°C, 110°C, or 120°C, or in a range between any two of those values. The time period of the drying treatment is 6 h to 12 h, including but not limited to any one of 6 h, 7 h, 8 h, 9 h, 10 h, 11 h, and 12 h, or in a range between any two of those values.

Further, in some embodiments, in step S2, the volume ratio of the buffer base solution to the first mixture solution used is 1:(1 to 3), including but not limited to any one of 1:1, 1:1.5, 1:2, 1:2.5, and 1:3, or in a range between any two of those values. The volume ratio of the buffer base solution to the second mixture solution used is 1:(2 to 9), including but not limited to 1:2, 1:3, 1:4, 1:5, 1:6, 1:7, 1:8, and 1:9, or in a range between any two of those values. The volume ratio of the buffer base solution to the precipitant solution used is 1:(2 to 9), including but not limited to 1:2, 1:3, 1:4, 1:5, 1:6, 1:7, 1:8, 1:9.

In a third aspect, an embodiment of the present application provides a lithium manganese iron phosphate cathode material, which is prepared from the manganese iron phosphate precursor provided in the first aspect of the present application, or prepared from a manganese iron phosphate precursor prepared by the preparation method of the manganese iron phosphate precursor provided in the second aspect of the present application.

The LMFP cathode material of the present application is prepared from the above-described manganese iron phosphate precursor. Due to the advantages of the precursor's orderly morphology, uniform particle size distribution, and uniform distribution of metal elements in the crystal lattice, the LMFP cathode material has the advantages of a high specific capacity and a good rate performance.

In some embodiments, the LMFP cathode material is represented by a formula of LiFeₓMn₁₋ₓPO₄/C, wherein 0<x<1.

The LMFP cathode material has an average particle size of 1.5 µm to 1.7 µm, a D50 particle size of 1.5 µm to 1.7 µm, and a span of 1.9 to 2.3.

In the present application, the value of x includes, but is not limited to, 0.01, 0.05, 0.1, 0.2, 0.3, 0.4, 0.5, 0.6, 0.7, 0.8, 0.9, 0.95, 0.99, etc.

In the present application, the average particle size of the LMFP cathode material is 1.5 µm to 1.7 µm, including but not limited to 1.5 µm, 1.55 µm, 1.6 µm, 1.65 µm, 1.7 µm, etc. In some embodiments, the average particle size of the LMFP cathode material is further preferably 1.599 µm to 1.689 µm.

In the present application, the D50 particle size of the LMFP cathode material is 1.5 µm to 1.7 µm, including but not limited to 1.5 µm, 1.55 µm, 1.6 µm, 1.65 µm, 1.7 µm, etc. In some embodiments, the D50 particle size of the LMFP cathode material is further preferably 1.548 µm to 1.689 µm.

Further, in some embodiments, the D10 particle size of the LMFP cathode material is 0.2 µm to 0.5 µm, including but not limited to 0.2 µm, 0.25 µm, 0.3 µm, 0.35 µm, 0.4 µm, 0.45 µm, 0.5 µm, etc. In some embodiments, the D10 particle size of the LMFP cathode material is further preferably 0.309 µm to 0.477 µm.

Further, in some embodiments, the D90 particle size of the LMFP cathode material is 3.2 µm to 4.5 µm, including but not limited to 3.2 µm, 3.5 µm, 3.8 µm, 4 µm, 4.2 µm, 4.4 µm, 4.5 µm, etc. In some embodiments, the D90 particle size of the LMFP cathode material is further preferably from 3.336 µm to 4.101 µm.

In the present application, the span of the LMFP cathode material is 1.9 to 2.3, including but not limited to 1.9, 1.95, 2, 2.05, 2.1, 2.15, 2.2, 2.25, 2.3, etc. In some embodiments, the span of the LMFP cathode material is further preferably 1.93 to 2.21.

Further, in some embodiments, the primary particles of the LMFP cathode material have an irregular spherical morphology.

In the technical solutions of the embodiments of the present application, the primary particles of the LMFP cathode material all have an irregular spherical morphology, without the coexistence of various morphologies such as rods, fragments, and spheres, resulting in a uniform and orderly overall morphology. Additionally, the span of the LMFP cathode material is controlled within the range of 1.9 to 2.3, indicating a high degree of concentration in the particle size distribution of the LMFP cathode material. As a result, on one hand, dispersion of the LMFP cathode material in an electrode slurry is enhanced, facilitating a formation of a smoother electrode coating, and on the other hand, lithium-ion transport performance is optimized and structural stability is increased, improving electrochemical performance .

Further, in some embodiments, the compacted density of the LMFP cathode material is 2.0 g/cm³ to 2.2 g/cm³, including but not limited to 2.0 g/cm³, 2.02 g/cm³, 2.05 g/cm³, 2.08 g/cm³, 2.1 g/cm³, 2.12 g/cm³, 2.15 g/cm³, 2.18 g/cm³, 2.2 g/cm³, etc. In some embodiments, the compacted density of the LMFP cathode material is further preferably 2.036 g/cm³ to 2.159 g/cm³.

In the technical solutions of the embodiments of the present application, the LMFP cathode material has a relatively high compacted density, which can improve the specific discharge capacity and the rate performance, and is conducive to reducing the usage amount of the cathode material and lowering the preparation cost of the battery.

Further, in some embodiments, the specific surface area of the LMFP cathode material is 12 m²/g to 23 m²/g, including but not limited to 12 m²/g, 13 m²/g, 14 m²/g, 15 m²/g, 16 m²/g, 17 m²/g, 18 m²/g, 19 m²/g, 20 m²/g, 21 m²/g, 22 m²/g, 23 m²/g, etc. In some embodiments, the specific surface area of the LMFP cathode material is further preferably 12.11 m²/g to 22.59 m²/g.

In the technical solutions of the embodiments of the present application, the LMFP cathode material has a relatively moderate specific surface area, which means that it has more active sites for the electrochemical reaction, and can improve the lithium-ion transport rate, enabling the battery to exhibit higher specific discharge capacity and better rate performance.

Further, in some embodiments, the specific discharge capacity at 0.1 C of the LMFP cathode material is 143 mAh/g to 158 mAh/g, including but not limited to 143 mAh/g, 145 mAh/g, 148 mAh/g, 150 mAh/g, 152 mAh/g, 155 mAh/g, 158 mAh/g, etc.

Further, in some embodiments, the specific discharge capacity at 2 C of the LMFP cathode material is 120 mAh/g to 142 mAh/g, including but not limited to 120 mAh/g, 125 mAh/g, 130 mAh/g, 135 mAh/g, 140 mAh/g, 142 mAh/g, etc.

Further, in some embodiments, the rate of the LMFP cathode material at 2 C/0.1 C is 83% to 91%, including but not limited to 83%, 84%, 85%, 86%, 87%, 88%, 89%, 90%, 91%, etc.

In the technical solutions of the embodiments of the present application, the LMFP cathode material has a high rate performance, exhibits an excellent fast charging and discharging capability, and is suitable for high power output application scenarios.

The LMFP cathode material provided in the present application includes primary particles with an irregular spherical morphology, and has advantages of small particle size, uniform particle size distribution, moderate specific surface area, and high compacted density. Thus, the LMFP cathode material exhibits a higher specific discharge capacity and a higher rate performance, leading to an excellent electrochemical performance.

Further, in some embodiments, the LMFP cathode material is prepared by mixing a manganese iron phosphate precursor with a lithium source uniformly and then subjected to a high-temperature solid-phase method, wherein the manganese iron phosphate precursor is the manganese iron phosphate precursor provided in the first aspect of the present application, or is a manganese iron phosphate precursor prepared by the preparation method for the manganese iron phosphate precursor provided in the second aspect of the present application.

Further, in some embodiments, the molar ratio of the manganese iron phosphate precursor to the lithium source is 1:(1 to 1.03), including but not limited to 1:1, 1:1.01, 1:1.02, 1:1.03, etc.

Further, in some embodiments, the lithium source is lithium carbonate.

Further, in some embodiments, in the process of mixing the manganese iron phosphate precursor with the lithium source uniformly, a carbon source is further added.

Yet further, in some embodiments, the molar ratio of the manganese iron phosphate precursor to the carbon source is 1:(0.01 to 0.2), including but not limited to 1:0.01, 1:0.02, 1:0.05, 1:0.08, 1:0.1, 1:0.12, 1:0.15, 1:0.18, 1:0.2, etc., which is not limited in the present application.

Yet further, in some embodiments, the carbon source is selected from glucose, sucrose, fructose, cellulose, starch, citric acid, polyacrylic acid, polyethylene glycol, dopamine, or a combination thereof.

Further, in some embodiments, the manganese iron phosphate precursor and the lithium source are mixed uniformly by grinding.

Further, in some embodiments, the high-temperature solid-phase method is a high-temperature gradient calcination.

Yet further, in some embodiments, in the process of high-temperature gradient calcination, the calcination temperature in the first stage is 350°C to 450°C, including but not limited to any one of 350°C, 370°C, 390°C, 410°C, 430°C, and 450°C, or in a range between any two of those values. The holding time period of the first stage is 2 h to 6 h, including but not limited to any one of 2 h, 3 h, 4 h, 5 h, and 6 h, or in a range between any two of those values. The calcination temperature in the second stage is 760°C to 790°C, including but not limited to any one of 760°C, 770°C, 780°C, and 790°C, or in a range between any two of those values. The holding time period of the second stage is 2 h to 6 h, including but not limited to any one of 2 h, 3 h, 4 h, 5 h, and 6 h, or in a range between any two of those values. The calcination temperature in the third stage is 600°C to 700°C, including but not limited to any one of 600°C, 620°C, 640°C, 660°C, 680°C, and 700°C, or in a range between any two of those values. The holding time period of the third stage is 2h to 6h, including but not limited to any one of 2 h, 3 h, 4 h, 5 h, and 6 h, or in a range between any two of those values. The rate of temperature increase and the rate of temperature decrease at each stage of the calcination process of the material are 3°C/min to 5°C/min.

Further, in some embodiments, the high-temperature gradient calcination is performed under a protective gas.

Yet further, in some embodiments, the protective gas includes nitrogen, helium, neon, argon, xenon, etc.

Further, in some embodiments, after the high-temperature gradient calcination, the method further includes: cooling, sufficiently grinding, and sieving the calcined product.

In a fourth aspect, an embodiment of the present application provides a cathode plate including the lithium manganese iron phosphate cathode material provided in the third aspect of the present application.

The cathode plate of the present application includes the above-described LMFP cathode material, and thus has the advantages of high specific capacity and good rate performance.

In a fifth aspect, an embodiment of the present application provides a secondary battery including the cathode plate provided in the fourth aspect of the present application.

The secondary battery of the present application includes the above-described cathode plate, and thus has the advantages of high specific capacity and good rate performance.

Some specific examples are described below. It should be noted that the examples described below are exemplary and are only used to illustrate the present application and are not intended to limit the present application. Unless otherwise specified in the examples, any specific techniques or conditions are carried out in accordance with techniques or conditions described in the literatures in the art or as per the product specifications. Unless otherwise noted with the manufacturer, the reagents or instruments used are conventional products that can be purchased commercially.

### Example 1

The preparation methods of a manganese iron phosphate precursor and a LMFP cathode material in this example are as follows.
(1) Preparation of a first mixture solution: a ferrous salt, a manganese salt, and a first complexant were dissolved into deionized water to prepare the first mixture solution, wherein the ferrous salt was ferrous sulfate, the manganese salt was manganese sulfate, the total concentration of the two metal ions was 80 g/L, a molar ratio of manganese to iron was 6:4, and the first complexant was citric acid with a concentration of 4 g/L.
(2) Preparation of a second mixture solution: a first precipitant and a second complexant were dissolved into deionized water to prepare the second mixture solution, wherein the first precipitant was ammonium dihydrogen phosphate with a concentration of 3.2 g/L, and the second complexant was ammonium hydroxide with a concentration of 8 g/L.
(3) Preparation of a precipitant solution: the second precipitant was dissolved into deionized water to prepare the precipitant solution, wherein the second precipitant was phosphoric acid and diammonium hydrogen phosphate with a molar ratio of 1:1 and a total concentration of 80 g/L.
(4) Preparation of a buffer base solution: a third complexant and a third precipitant were dissolved in deionized water to prepare the buffer base solution, wherein the third complexant was citric acid, the third precipitant was ammonium dihydrogen phosphate, a molar ratio of citric acid to ammonium dihydrogen phosphate was 1:3, a concentration of ammonium dihydrogen phosphate was 6 g/L, and a pH value of the buffer base solution was 4.
(5) Preparation of a manganese iron phosphate precursor: the first mixture solution, the second mixture solution, the precipitant solution, and the buffer base solution were taken with a volume ratio of 0.5:1:1:0.5; in order to ensure uniform stirring at the early stage of the reaction, 500 mL of the buffer base solution was added to a double-layered glass reactor, and a temperature during the reaction was controlled to be constant at 50°C by heating with a water bath; 500 mL of the first mixture solution, 1 L of the second mixture solution, and 1 L of the precipitant solution were simultaneously and slowly pumped into the reactor by a peristaltic pump to perform a co-precipitation reaction; the pH value of the co-precipitation reaction was kept at 4 by regulating the feed rate of the second mixture solution; during pumping the three solutions into the reactor, the stirring speed was controlled to be 800 rpm, N₂ was continuously introduced for protection, and the time period of the co-precipitation reaction was controlled to be 6 h; after the reaction was finished, aging was performed for 1 h at 50°C to obtain a precursor slurry; the precursor slurry was washed with deionized water to remove impurities in the precursor slurry, until the conductivity of the deionized water after washing was 120 µS/cm; and then the washed precursor slurry was placed into a blower oven at 110°C and dried for 10 h to obtain the manganese iron phosphate precursor.
(6) Preparation of a LMFP cathode material: the manganese iron phosphate precursor, lithium carbonate, and glucose were added to a mortar with a molar ratio of 1:1.03:0.09, ground until they were mixed uniformly, and then put into a crucible; the crucible was sent to a tube furnace, high-purity nitrogen was previously introduced, and the following staged calcination procedure was started when the oxygen content in the tube furnace was 8 ppm:
   first calcination stage: sintering at 400°C for 5 h;
   second calcination stage: sintering at 760°C for 5 h;
   third calcination stage: sintering at 700°C for 4 h;
   wherein the rate of temperature increase and the rate of temperature decrease in the staged calcination procedure were controlled at 5°C/min;
   after the staged calcination procedure was finished, the product was cooled to room temperature in the furnace, and then sieved using a 300-mesh sieve to obtain the LMFP cathode material.

### Example 2

The preparation methods of a manganese iron phosphate precursor and a LMFP cathode material in this example are as follows.
(1) Preparation of a first mixture solution: a ferrous salt, a manganese salt, and a first complexant were dissolved into deionized water to prepare the first mixture solution, wherein the ferrous salt was ferrous sulfate, the manganese salt was manganese nitrate, the total concentration of the two metal ions was 60 g/L, a molar ratio of manganese to iron was 7:3, and the first complexant was citric acid with a concentration of 3 g/L.
(2) Preparation of a second mixture solution: a first precipitant and a second complexant were dissolved into deionized water to prepare the second mixture solution, wherein the first precipitant was ammonium dihydrogen phosphate with a concentration of 4 g/L, and the second complexant was ammonium hydroxide with a concentration of 8 g/L.
(3) Preparation of a precipitant solution: the second precipitant was dissolved into deionized water to prepare the precipitant solution, wherein the second precipitant was diammonium hydrogen phosphate with a concentration of 60 g/L.
(4) Preparation of a buffer base solution: a third complexant and a third precipitant were dissolved into deionized water to prepare the buffer base solution, wherein the third complexant was ammonium hydroxide, the third precipitant was phosphoric acid and ammonium dihydrogen phosphate with a mass ratio of 1:3, a molar ratio of ammonium hydroxide to ammonium dihydrogen phosphate was 1:1, a concentration of ammonium dihydrogen phosphate was 8 g/L, and a pH value of the buffer base solution was 4.5.
(5) Preparation of a manganese iron phosphate precursor: the first mixture solution, the second mixture solution, the precipitant solution, and the buffer base solution were taken with a volume ratio of 1:3:3:0.5; in order to ensure uniform stirring at the early stage of the reaction, 500 mL of the buffer base solution was added to a double-layered glass reactor, and a temperature during the reaction was controlled to be constant at 50°C by heating with a water bath; 1 L of the first mixture solution, 3 L of the second mixture solution, and 3 L of the precipitant solution were simultaneously and slowly pumped into the reactor by a peristaltic pump to perform a co-precipitation reaction; the pH value of the co-precipitation reaction was kept at 4.5 by regulating the feed rate of the second mixture solution; during pumping the three solutions into the reactor, the stirring speed was controlled to be 900 rpm, N₂ was continuously introduced for protection, and the time period of the co-precipitation reaction was controlled to be 4 h; after the reaction was finished, aging was performed for 1 h at 50°C to obtain a precursor slurry; the precursor slurry was washed with deionized water to remove impurities in the precursor slurry, until the conductivity of the deionized water after washing was 128 µS/cm; and then the washed precursor slurry was placed into a blower oven at 110°C and dried for 8 h to obtain the manganese iron phosphate precursor.
(6) Preparation of a LMFP cathode material: the manganese iron phosphate precursor, lithium carbonate, and glucose were added to a mortar with a molar ratio of 1:1.02:0.1, ground until they were mixed uniformly, and then put into a crucible; the crucible was sent to a tube furnace, high-purity nitrogen was previously introduced, and the following staged calcination procedure was started when the oxygen content in the tube furnace was 8 ppm:
   first calcination stage: sintering at 400°C for 4 h;
   second calcination stage: sintering at 770°C for 4 h;
   third calcination stage: sintering at 700°C for 5 h;

   wherein the rate of temperature increase and the rate of temperature decrease in the staged calcination procedure were controlled at 4°C/min;
   after the staged calcination procedure was finished, the product was cooled to room temperature in the furnace, and then sieved using a 300-mesh sieve to obtain the LMFP cathode material.

### Example 3

The preparation methods of a manganese iron phosphate precursor and a LMFP cathode material in this example are as follows.
(1) Preparation of a first mixture solution: a ferrous salt, a manganese salt, and a first complexant were dissolved into deionized water to prepare the first mixture solution, wherein the ferrous salt was ferrous nitrate, the manganese salt was manganese nitrate, the total concentration of the two metal ions was 100 g/L, a molar ratio of manganese to iron was 7:3, and the first complexant was citric acid and sodium citrate with a mass ratio of 1:1 and a total concentration of 4.5 g/L.
(2) Preparation of a second mixture solution: a first precipitant and a second complexant were dissolved into deionized water to prepare the second mixture solution, wherein the first precipitant was diammonium hydrogen phosphate with a concentration of 9 g/L, and the second complexant was ethylene diamine tetraacetic acid with a concentration of 15 g/L.
(3) Preparation of a precipitant solution: the second precipitant was dissolved into deionized water to prepare the precipitant solution, wherein the second precipitant was phosphoric acid, diammonium hydrogen phosphate, ammonium dihydrogen phosphate, and ammonium phosphate with a molar ratio of 1:1:1:1 and a total concentration of 90 g/L.
(4) Preparation of a buffer base solution: a third complexant and a third precipitant were dissolved into deionized water to prepare the buffer base solution, wherein the third complexant was citric acid, the third precipitant was ammonium dihydrogen phosphate, a molar ratio of citric acid to ammonium dihydrogen phosphate was 1:5, a concentration of ammonium dihydrogen phosphate was 12 g/L, and a pH value of the buffer base solution was 4.3.
(5) Preparation of a manganese iron phosphate precursor: the first mixture solution, the second mixture solution, the precipitant solution, and the buffer base solution were taken with a volume ratio of 1:2:2:1; in order to ensure uniform stirring at the early stage of the reaction, 1 L of the buffer base solution was added to a double-layered glass reactor, and a temperature during the reaction was controlled to be constant at 55°C by heating with a water bath; 1 L of the first mixture solution, 2 L of the second mixture solution, and 2 L of the precipitant solution were simultaneously and slowly pumped into the reactor by a peristaltic pump to perform a co-precipitation reaction; the pH value of the co-precipitation reaction was kept at 4.3 by regulating the feed rate of the second mixture solution; during pumping the three solutions into the reactor, the stirring speed was controlled to be 600 rpm, N₂ was continuously introduced for protection, and the time period of the co-precipitation reaction was controlled to be 4 h; after the reaction was finished, aging was performed for 2 h at 55°C to obtain a precursor slurry; the precursor slurry was washed with deionized water to remove impurities in the precursor slurry, until the conductivity of the deionized water after washing was 136 µS/cm; and then the washed precursor slurry was placed into a blower oven at 120°C and dried for 6 h to obtain the manganese iron phosphate precursor.
(6) Preparation of a LMFP cathode material: the manganese iron phosphate precursor, lithium carbonate, and glucose were added to a mortar with a molar ratio of 1:1.02:0.12, ground until they were mixed uniformly, and then put into a crucible; the crucible was sent to a tube furnace, high-purity nitrogen was previously introduced, and the following staged calcination procedure was started when the oxygen content in the tube furnace was 6 ppm:
   first calcination stage: sintering at 350°C for 4 h;
   second calcination stage: sintering at 790°C for 3 h;
   third calcination stage: sintering at 650°C for 6 h;
   wherein the rate of temperature increase and the rate of temperature decrease in the staged calcination procedure were controlled at 5°C/min;
   after the staged calcination procedure was finished, the product was cooled to room temperature in the furnace, and then sieved using a 300-mesh sieve to obtain the LMFP cathode material.

### Example 4

This example was substantially the same as Example 1 except that the pH value of the co-precipitation reaction was 4.5.

### Example 5

This example was substantially the same as Example 2 except that the buffer base solution in step (4) was different.

The buffer base solution in step (4) was prepared by dissolving a third complexant and a third precipitant into deionized water, wherein the third complexant was ascorbic acid with a concentration of 2 g/L, the third precipitant was phosphoric acid and ammonium phosphate with a mass ratio of 1:4, a concentration of ammonium phosphate was 8 g/L, and a pH value of the buffer base solution was 4.5.

### Example 6

This example was substantially the same as Example 3 except that the second mixture solution in step (2) was different.

The second mixture solution in step (2) was prepared by dissolving a first precipitant and a second complexant into deionized water, wherein the first precipitant was diammonium hydrogen phosphate with a concentration of 4.8 g/L, and the second complexant was ammonium hydroxide and tri(2-aminoethyl) triacetic acid with a concentration of 8 g/L.

### Examples 7 to 13

Examples 7 to 13 were substantially the same as Example 1 except that the molar ratio of manganese to iron in the first mixture solution was different.
Example 7: the molar ratio of manganese to iron was 9:1;
Example 8: the molar ratio of manganese to iron was 8:2;
Example 9: the molar ratio of manganese to iron was 5:5;
Example 10: the molar ratio of manganese to iron was 4:6;
Example 11: the molar ratio of manganese to iron was 3:7;
Example 12: the molar ratio of manganese to iron was 2:8;
Example 13: the molar ratio of manganese to iron was 1:9.

### Comparative examples 1 to 9

Comparative examples 1 to 9 were substantially the same as Example 1 except the following:
Comparative example 1: no first complexant was added in the first mixture solution.
Comparative example 2: no second complexant was added in the second mixture solution.
Comparative example 3: no first precipitant was added in the second mixture solution.
Comparative example 4: no second precipitant was added in the precipitant solution, that is, the precipitant solution in the co-precipitation reaction was replaced by equal volume of deionized water.
Comparative example 5: no third complexant was added in the buffer base solution.
Comparative example 6: no third precipitant was added in the buffer base solution.
Comparative example 7: the pH value of the co-precipitation reaction was 3.5.
Comparative example 8: the pH value of the co-precipitation reaction was 5.
Comparative example 9: the pH value of the co-precipitation reaction was 5.5.

### Test example

### I. Test Items:

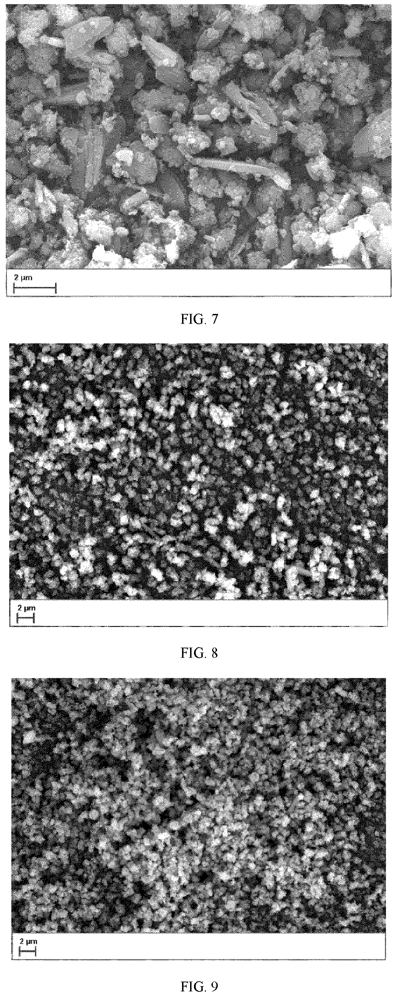

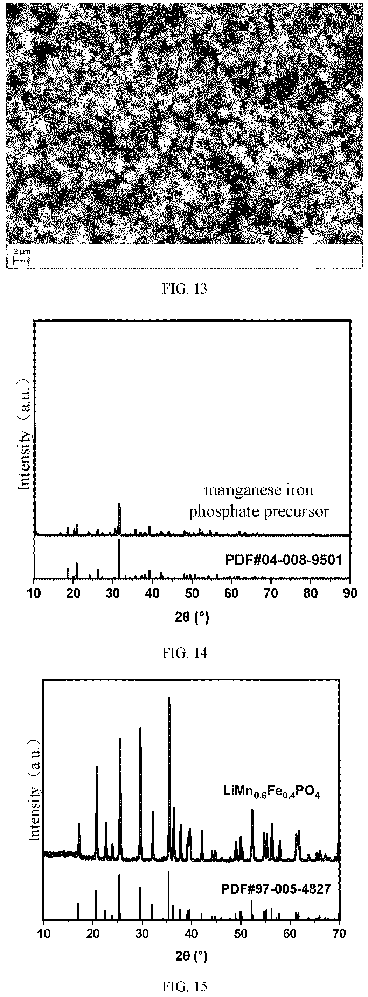

1. SEM Test: The SEM test of the manganese iron phosphate precursors and the LMFP cathode materials was conducted using the MERLIN Compact field emission scanning electron microscope (model: Quanta 200FEG) manufactured by Zeiss. The results are shown in Tables 1 to 2 and FIGS. 2 to 13. FIGS. 2 to 7 show the SEM images of the manganese iron phosphate precursors of Example 1, Example 4, Comparative Example 1, and Comparative Examples 7 to 9, respectively. FIGS. 8 to 13 show the SEM images of the LMFP cathode materials of Example 1, Example 4, Comparative Example 1, and Comparative Examples 7 to 9, respectively.
2. EDS Test: The element ratios of the manganese iron phosphate precursors and the LMFP cathode materials were analyzed using the energy dispersive X-ray diffractometer from Oxford, and the molar ratios of manganese element to iron element (Mn:Fe) were calculated. The results are shown in Tables 1 to 2.
3. XRD Test: The phase analysis of the manganese iron phosphate precursors and the LMFP cathode materials was conducted using the Bruker D8 Advance X-ray diffractometer manufactured by Bruker, Germany, and the molar ratios of manganese element to iron element (Mn:Fe) were calculated. The results are shown in Tables 1 to 2 and FIGS. 14 to 15.
4. Particle Size Test: The particle sizes of the manganese iron phosphate precursors and the LMFP cathode materials were analyzed using the Mastersizer 2000 laser particle sizer manufactured by Malvern Instruments Ltd., UK. The results are shown in Tables 1 to 2.
5. Compacted Density: The compacted densities of the manganese iron phosphate precursors and the LMFP cathode materials were tested using the UTM7305 battery powder compacted density meter provided by SHENZHEN SUNS TECHNOLOGY STOCK Co., Ltd. The results are shown in Tables 1 to 2.
6. Specific Surface Area: The specific surface areas of the manganese iron phosphate precursors and the LMFP cathode materials were tested using the BELSORP MaxII specific surface area analyzer manufactured by MicrotracBEL Corp., Japan. The results are shown in Tables 1 to 2.
7. Performance Test of Secondary Battery:

The LMFP cathode material was mixed with a conductive carbon black and a PVDF binder in a mass ratio of 90:5:5 to obtain a cathode slurry. The cathode slurry was coated onto an aluminum foil with a thickness of 12 µm to form a cathode slurry layer with a thickness of 80 µm. The coated foil was placed into an oven at 110°C to be dried for 10 h and then punched and cut into rounded electrode plates with a diameter of 15 mm. The rounded electrode plate was rolled to achieve a compacted density of 1.8 g/cm³ to obtain a cathode plate.

Lithium hexafluorophosphate (LiPF₆) as a lithium salt was dissolved into a mixture of ethylene carbonate (EC), ethyl methyl carbonate (EMC), and diethyl carbonate (DEC) in a volume ratio of 1:1:1 as an organic solvent to prepare an electrolyte liquid with a concentration of 1 M. A lithium plate with a diameter of 16 mm was used as a counter electrode and assembled with the cathode plate and the electrolyte liquid in a glove box of LG2400/1000TS manufactured by Vigor Technologies (Suzhou) Co., Ltd. to obtain a button-type half battery.

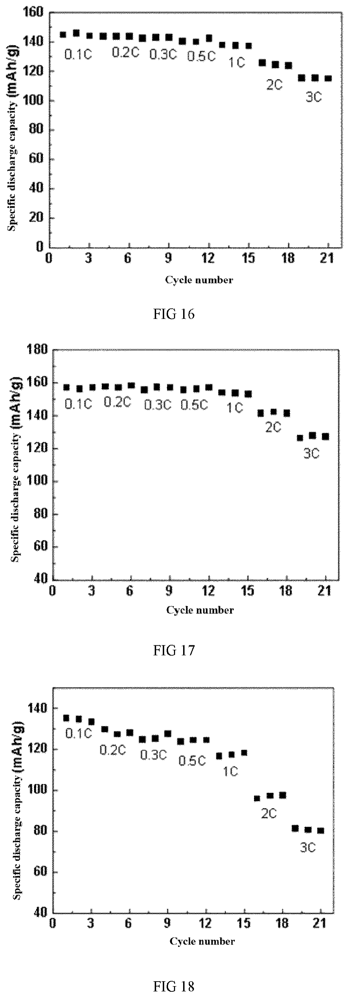

The rate performance of the button-type half battery was tested using the battery performance test system (Model: CT3002A) from Wuhan Land Electronics Co., Ltd., with the test temperature of 25°C, the voltage range of 2 to 4.35 V, and the rate range of 0.1 C to 3C. The results are shown in Table 3 and FIGS. 16 to 18.

### II. Analysis of Results

Referring to Table 1, FIGS. 2 to 3, and FIG. 14, the primary particles of the manganese iron phosphate precursors prepared in Examples 1 to 13 exhibit an olivine morphology that was uniform and orderly, as well as characteristics of small particle size, uniform particle size distribution, moderate specific surface area, and high compacted density. In addition, the molar ratios of manganese to iron (Mn:Fe) in the manganese iron phosphate precursors ranged from 91:9 to 11:89, with a uniform distribution of Mn/Fe in the crystal lattice, indicating a wide distribution range of Mn:Fe ratios of the precursor that can be adjusted according to actual production requirements.

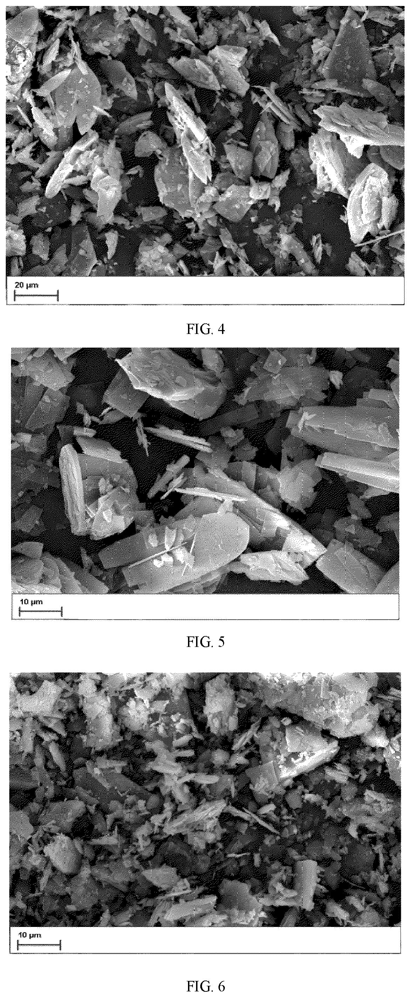

It can be seen from the comparation of FIG. 2 and FIG. 4 that as compared to Example 1, the absence of the first complexant in the first mixture solution in Comparative Example 1 causes the manganese iron phosphate precursor prepared in Comparative Example 1 to be in fragments and fail to form an olivine morphology. Compared to Example 1, the average particle size, the D10 particle size, the D50 particle size, and the D90 particle size of the manganese iron phosphate precursor prepared in Comparative Example 1 are significantly larger, the specific surface area is also significantly increased, but the compacted density is significantly reduced, indicating defects of larger particle size, non-uniform particle size distribution, excessive specific surface area, and low compacted density. This suggests that the addition of the first complexant to the first mixture solution can effectively pre-complex the ferrous ions in the solution, thereby facilitating the co-precipitation of manganese and iron elements to form the olivine-type precursor. Without the first complexant in the first mixture solution, the ferrous ions in the first mixture solution are prone to oxidation into ferric irons rather than co-precipitating with the manganese ions during the co-precipitation reaction, leading to the failure to form a precursor with an orderly and uniform morphology.

Likewise, compared to Example 1, the absence of pre-added complexant or precipitant in the second mixture solution, the precipitant solution, or the buffer base solution in Comparative Example 2 to 6 leads to the manganese iron phosphate precursor that fails to achieve an olivine morphology and exhibits defects of large particle size, wide particle size distribution, excessive specific surface area, and low compacted density. This is because pre-mixing different complexants with precipitants and using them as the second mixture solution and the buffer base solution can rapidly stabilize the pH value of the reaction system and can achieve complexation, thereby allowing the precipitation reaction process and the liquid phase mass transfer process to be performed in steady state and achieving better control over the morphology of the precipitate obtained after the rection. As a result, the manganese iron phosphate precursor having a uniform distribution of Mn/Fe in the crystal lattice, an orderly particle morphology, a uniform particle size distribution, and an excellent performance is successfully prepared.

In Examples 1 to 13, the pH values of the reaction systems during the co-precipitation rection were controlled between 4 and 4.5, all resulting in the manganese iron phosphate precursors with orderly morphology, uniform size, and olivine morphology. It can be seen from the comparison of FIG. 2 and FIG. 5 that as compared to Example 1, in Comparative Example 7 with the pH value no more than 3.5, the nucleation rate of the material was too slow, the growth layer is thinner, and the crystalline growth speed is slower, leading to the precursor having a fragmental structure. It can be seen from the comparison of FIG. 2 and FIGS. 6 to 7 that as compared to Example 1, in Comparative Examples 8 to 9 with the pH value no less than 5, the nucleation rate of the material was too fast, disenabling the orderly growth of the precursor, making the control of the material synthesis in this condition difficult, and leading to the precursor characterized by the coexistence of a fragmental structure and a rod-like structure.

Referring to Table 2, FIGS. 8 to 9, and FIG. 15, the primary particles of the LMFP cathode materials prepared in Examples 1 to 13 exhibit an irregular spherical morphology that was orderly, as well as characteristics of small particle size, uniform particle size distribution, moderate specific surface area, and high compacted density. In addition, the molar ratios of Mn to Fe in the LMFP cathode materials are substantially consistent with those in the manganese iron phosphate precursors, which can be adjusted as required based on the actual production requirements.

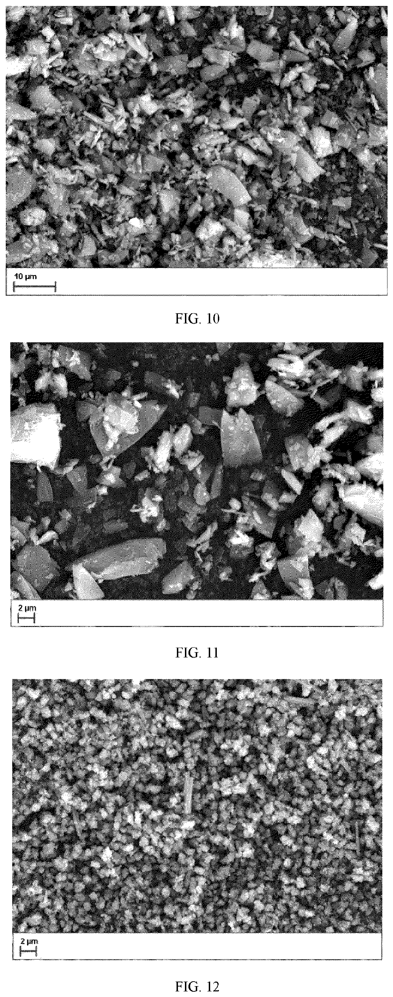

It can be seen from the comparation of FIG. 8 and FIG. 10 that as compared to Example 1, the LMFP cathode material prepared in Comparative Example 1 has a fragmental structure and a non-orderly morphology. Compared to Example 1, the average particle size, the D10 particle size, the D50 particle size, the D90 particle size, and the span of the LMFP cathode material prepared in Comparative Example 1 are significantly increased, the specific surface area is approximately doubled, but the compacted density is significantly reduced, indicating defects of larger particle size, non-uniform particle size distribution, excessive specific surface area, and low compacted density. This suggests that the addition of the first complexant to the first mixture solution can effectively achieve the co-precipitation of manganese and iron elements, leading to the manganese iron phosphate precursor having an olivine morphology that is orderly in morphology, uniform in size, and moderate in specific surface area, and thus leading to the LMFP cathode material that is orderly in morphology and uniform in size and has an irregular spherical morphology.

Likewise, compared to Example 1, the absence of pre-added complexant or precipitant in the second mixture solution, the precipitant solution, or the buffer base solution in Comparative Example 2 to 6 leads to the LMFP cathode material that has an irregular flaky morphology, as well as a large particle size, a wide particle size distribution, an excessive specific surface area, and a low compacted density. This suggests that pre-mixing different complexants with precipitants and using them as the second mixture solution and the buffer base solution is also crucial to the preparation of the LMFP cathode material that is orderly in morphology and uniform in size and has an irregular spherical morphology.

In Examples 1 to 13, the pH values of the reaction systems during the co-precipitation rection were controlled between 4 and 4.5, all resulting in the LMFP cathode material that is orderly in morphology and uniform in size and has an irregular spherical morphology. It can be seen from the comparison of FIG. 8 and FIG. 11 that as compared to Example 1, in Comparative Example 7 with the pH value no more than 3.5, as the manganese iron phosphate precursor exhibits a flaky morphology with a larger size, the LMFP cathode material synthesized after mixing the manganese iron phosphate precursor and the lithium salt exhibits an even thicker flaky morphology. It can be seen from the comparison of FIG. 2 and FIGS. 12 to 13 that as compared to Example 1, in Comparative Examples 8 to 9, where the pH value is no less than 5, the manganese iron phosphate precursor is characterized by the coexistence of a fragmental structure and a rod-like structure. Consequently, the synthesized LMFP cathode material is characterized by the coexistence of a flaky structure and an irregularly spherical structure.

Referring to Table 3 and FIGS. 16 to 17, the LMFP cathode materials prepared in Examples 1 to 13 has a specific discharge capacity at 0.1 C of 143 mAh/g to 158 mAh/g and a specific discharge capacity at 2 C of 120 mAh/g to 143 mAh/g, with a 2C/0.1C rate of 83% to 91%, indicating a high specific discharge capacity and a good rate performance.

In Example 1, where the pH value during the co-precipitation reaction was 4, the LMFP cathode material has a specific discharge capacity at 0.1 C of 145 mAh/g and a specific discharge capacity at 2 C of 126 mAh/g. In Example 4, where the pH value during the co-precipitation reaction was 4.5, the LMFP cathode material has a specific discharge capacity at 0.1 C of 158 mAh/g and a specific discharge capacity at 2 C of 142 mAh/g, demonstrating better specific discharge capacity and rate performance than Example 1. In Comparative Example 7 where the pH value during the co-precipitation reaction was no more than 3.5 and Comparative Examples 8 to 9 where the pH value during the co-precipitation reaction was no less than 5, the LMFP cathode materials has significant decreased specific discharge capacity and rate performance. This suggests that conducting the co-precipitation reaction at an appropriate pH value can achieve a higher specific discharge capacity and a better rate performance of the LMFP cathode material.

It can be seen from the comparison of FIG. 16 and FIG. 18 that as compared to Example 1, in Comparative Example 1 where no first complexant was added to the first mixture solution, the prepared LMFP cathode material has an non-orderly morphology, a larger particle size, a non-uniform particle size distribution, an excessively high specific surface area, and a lower compacted density, resulting the LMFP cathode material having a poor rate performance, with the specific discharge capacity at 2C of just 105 mAh/g and the 2C/0.1C rate of just 75%. Likewise, compared to Example 1, in Comparative Examples 2 to 6 where no complexant or precipitant were previously added to the second mixture solution, the precipitant solution, or the buffer base solution, the LMFP cathode material also has a poor rate performance.

In summary, the present application utilizes the co-precipitation method to prepare the manganese iron phosphate precursor. The prepared manganese iron phosphate precursor has an orderly and uniform morphology, as well as advantages of a small particle size, a uniform particle size distribution, a moderate specific surface area, and a high compacted density. The cathode material prepared from this precursor exhibits an increased specific discharge capacity and an improved rate performance, with excellent electrochemical performance.

**Table 1: Relevant parameters of manganese iron phosphate precursors**

| Solution | | Particle morphology | Mn:Fe | Particle size (µm) | | | | Span | Compacted density (g/cm³) | Specific surface area (m²/g) |
|---|---|---|---|---|---|---|---|---|---|---|
| | | | | AVG. | D10 | D50 | D90 | | | |
| Ex. | 1 | olivine | 58:42 | 2.0 | 1.4 | 1.8 | 2.4 | 0.56 | 1.610 | 27.05 |
| | 2 | | 68:32 | 2.2 | 1.4 | 1.9 | 2.5 | 0.58 | 1.651 | 25.43 |
| | 3 | | 71:29 | 2.2 | 1.5 | 1.8 | 2.6 | 0.61 | 1.672 | 29.88 |
| | 4 | | 60:40 | 2.1 | 1.5 | 1.8 | 2.7 | 0.67 | 1.682 | 28.65 |
| | 5 | | 69:31 | 2.1 | 1.6 | 1.9 | 2.5 | 0.47 | 1.752 | 26.85 |
| | 6 | | 73:27 | 2.1 | 1.6 | 1.9 | 2.6 | 0.53 | 1.699 | 27.96 |
| | 7 | | 91:9 | 2.1 | 1.5 | 1.7 | 2.4 | 0.53 | 1.587 | 28.43 |
| | 8 | | 79:21 | 2.2 | 1.5 | 1.8 | 2.5 | 0.56 | 1.699 | 28.56 |
| | 9 | | 48:52 | 2.3 | 1.6 | 1.8 | 2.5 | 0.50 | 1.708 | 29.01 |
| | 10 | | 40:60 | 2.3 | 1.6 | 1.8 | 2.4 | 0.44 | 1.733 | 29.30 |
| | 11 | | 31:69 | 2.3 | 1.6 | 1.9 | 2.5 | 0.47 | 1.748 | 28.65 |
| | 12 | | 18:82 | 2.4 | 1.7 | 1.9 | 2.5 | 0.42 | 1.678 | 25.89 |
| | 13 | | 11:89 | 2.4 | 1.7 | 1.9 | 2.6 | 0.47 | 1.732 | 28.30 |
| Comp. Ex. | 1 | Fragments+rods | 56:44 | 2.6 | 1.8 | 2.1 | 2.9 | 0.52 | 1.356 | 32.11 |
| | 2 | | 57:43 | 2.7 | 1.9 | 2.2 | 2.9 | 0.45 | 1.521 | 30.20 |
| | 3 | | 61:39 | 2.7 | 1.9 | 2.2 | 2.9 | 0.45 | 1.457 | 30.75 |
| | 4 | | 62:38 | 2.6 | 1.9 | 2.1 | 2.8 | 0.43 | 1.489 | 31.25 |
| | 5 | | 60:40 | 2.7 | 1.9 | 2.2 | 2.9 | 0.45 | 1.477 | 30.47 |
| | 6 | | 60:40 | 2.7 | 1.9 | 2.2 | 2.9 | 0.45 | 1.489 | 29.88 |
| | 7 | | 59:41 | 2.9 | 1.8 | 2.3 | 3.0 | 0.52 | 1.410 | 29.96 |
| | 8 | | 58:42 | 2.8 | 1.8 | 2.3 | 3.0 | 0.52 | 1.586 | 32.01 |
| | 9 | | 62:37 | 2.7 | 1.8 | 2.2 | 2.8 | 0.45 | 1.599 | 31.56 |

**Table 2: Relevant parameters of LMFP cathode materials**

| Solution | | Particle morphology | Mn:Fe | Particle size (µm) | | | | Span | Compacted density (g/cm³) | Specific surface area (m²/g) |
|---|---|---|---|---|---|---|---|---|---|---|
| | | | | AVG. | D10 | D50 | D90 | | | |
| Ex. | 1 | irregular spheres | 58:42 | 1.601 | 0.316 | 1.559 | 3.408 | 1.98 | 2.148 | 12.11 |
| | 2 | | 68:32 | 1.633 | 0.401 | 1.591 | 3.589 | 2.00 | 2.056 | 16.01 |
| | 3 | | 71:29 | 1.619 | 0.356 | 1.563 | 3.481 | 2.00 | 2.122 | 15.99 |
| | 4 | | 60:40 | 1.622 | 0.359 | 1.559 | 3.566 | 2.06 | 2.036 | 14.73 |
| | 5 | | 69:31 | 1.631 | 0.358 | 1.578 | 3.571 | 2.04 | 2.059 | 14.77 |
| | 6 | | 73:27 | 1.650 | 0.477 | 1.689 | 4.101 | 2.15 | 2.075 | 19.01 |
| | 7 | | 91:9 | 1.671 | 0.378 | 1.591 | 3.894 | 2.21 | 2.115 | 15.58 |
| | 8 | | 79:21 | 1.620 | 0.341 | 1.548 | 3.507 | 2.05 | 2.069 | 22.59 |
| | 9 | | 48:52 | 1.610 | 0.309 | 1.551 | 3.336 | 1.95 | 2.159 | 20.36 |
| | 10 | | 40:60 | 1.689 | 0.410 | 1.641 | 3.995 | 2.18 | 2.147 | 22.21 |
| | 11 | | 31:69 | 1.599 | 0.335 | 1.561 | 3.471 | 2.01 | 2.036 | 17.89 |
| | 12 | | 18:82 | 1.633 | 0.389 | 1.599 | 3.475 | 1.93 | 2.098 | 18.09 |
| | 13 | | 11:89 | 1.651 | 0.379 | 1.601 | 3.589 | 2.00 | 2.076 | 19.26 |
| Comp. Ex. | 1 | flakes+ irregular spheres | 56:44 | 1.697 | 0.411 | 1.663 | 4.111 | 2.22 | 1.859 | 22.56 |
| | 2 | | 57:43 | 1.689 | 0.399 | 1.589 | 4.027 | 2.28 | 1.789 | 32.58 |
| | 3 | | 61:39 | 1.710 | 0.398 | 1.612 | 4.352 | 2.45 | 1.970 | 26.58 |
| | 4 | | 62:38 | 1.681 | 0.391 | 1.602 | 4.521 | 2.58 | 1.532 | 30.06 |
| | 5 | | 60:40 | 1.700 | 0.415 | 1.603 | 4.362 | 2.46 | 1.796 | 29.89 |
| | 6 | | 61:39 | 1.711 | 0.420 | 1.685 | 4.587 | 2.47 | 1.704 | 27.04 |
| | 7 | | 57:43 | 1.782 | 0.431 | 1.675 | 4.421 | 2.38 | 1.920 | 26.56 |
| | 8 | | 58:42 | 1.752 | 0.402 | 1.696 | 4.320 | 2.31 | 1.890 | 24.34 |
| | 9 | | 63:37 | 1.741 | 0.389 | 1.688 | 4.015 | 2.15 | 1.759 | 27.56 |

**Table 3. Electrical properties of LMFP cathode materials**

| Solution | | Specific discharge capacity at 0.1C (mAh/g) | Specific discharge capacity at 2C (mAh/g) | 2C/0.1C rate (%) |
|---|---|---|---|---|
| | 1 | 145 | 126 | 87 |
| | 2 | 147 | 122 | 83 |
| | 3 | 156 | 140 | 90 |
| | 4 | 158 | 142 | 90 |
| | 5 | 152 | 139 | 91 |
| | 6 | 149 | 128 | 85 |
| Ex. | 7 | 148 | 128 | 86 |
| | 8 | 147 | 127 | 86 |
| | 9 | 143 | 128 | 90 |
| | 10 | 154 | 130 | 84 |
| | 11 | 144 | 129 | 89 |
| | 12 | 145 | 131 | 90 |
| | 13 | 144 | 120 | 83 |
| Comp. Ex. | 1 | 140 | 105 | 75 |
| | 2 | 133 | 100 | 75 |
| | 3 | 138 | 106 | 77 |
| | 4 | 130 | 96 | 74 |
| | 5 | 140 | 101 | 72 |
| | 6 | 135 | 104 | 77 |
| | 7 | 122 | 91 | 75 |
| | 8 | 140 | 106 | 76 |
| | 9 | 139 | 100 | 72 |

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A manganese iron phosphate precursor, represented by a formula of (NH₄)_{(3-2x-2y)}FeₓMn_{y}PO₄·H₂O, wherein 0<x<1 and 0<y<1, and wherein the manganese iron phosphate precursor has an average particle size of 2.0 µm to 2.5 µm, a D50 particle size of 1.6 µm to 2.0 µm, and a span of 0.4 to 0.7.

2. The manganese iron phosphate precursor of claim 1, wherein the manganese iron phosphate precursor comprises a plurality of primary particles having an olivine morphology, and a ratio of a length to a width of the manganese iron phosphate precursor is (2 to 2.5):(1 to 1.5).

3. The manganese iron phosphate precursor of claim 1, wherein the manganese iron phosphate precursor has a compacted density of 1.4 g/cm³ to 1.8 g/cm³ and a specific surface area of 25 m²/g to 30 m²/g.

4. A preparation method for a manganese iron phosphate precursor, comprising:
providing a first mixture solution, a second mixture solution, a precipitant solution, and a buffer base solution; and
simultaneously adding the first mixture solution, the second mixture solution, and the precipitant solution into the buffer base solution to perform a co-precipitation reaction, an aging treatment, a washing treatment, and a drying treatment to prepare the manganese iron phosphate precursor;
wherein a pH value of the co-precipitation reaction is greater than 3.5 and less than 5;
the first mixture solution contains a ferrous salt, a manganese salt, and a first complexant;
the second mixture solution contains a second complexant and a first precipitant;
the precipitant solution contains a second precipitant;
the buffer base solution contains a third precipitant and a third complexant;
the first complexant and the second complexant are different from each other; and
the third complexant comprises the first complexant, the second complexant, or a combination thereof.

5. The preparation method for the manganese iron phosphate precursor of claim 4, satisfying one or more of the following conditions:
(1) the ferrous salt comprises ferrous sulfate, ferrous nitrate, ferrous oxalate, ferrous chloride, or a combination thereof;
(2) the manganese salt comprises manganese sulfate, manganese nitrate, manganese acetate, manganese oxalate, manganese chloride, or a combination thereof;
(3) the first complexant comprises citric acid, sodium citrate, ascorbic acid, lactic acid, malic acid, or a combination thereof;
(4) the second complexant comprises ammonium hydroxide, ethylenediaminetetraacetic acid, diisopropylaminotetraacetic acid, tris(2-aminoethyl)triacetic acid, or a combination thereof;
(5) the third complexant comprises citric acid, sodium citrate, ammonium hydroxide, ascorbic acid, lactic acid, malic acid, or a combination thereof; and
(6) the first precipitant, the second precipitant, and the third precipitant each independently comprise phosphoric acid, diammonium hydrogen phosphate, ammonium dihydrogen phosphate, ammonium phosphate, or a combination thereof.

6. The preparation method for the manganese iron phosphate precursor of claim 4, wherein the first mixture solution satisfies one or more of the following conditions:
(1) a total concentration of the manganese ions and the ferrous ions is 10 g/L to 120 g/L;
(2) a molar ratio of the ferrous ions to the manganese ions is 1:(0.01 to 100); and
(3) a concentration of the first complexant is 2 g/L to 10 g/L.

7. The preparation method for the manganese iron phosphate precursor of claim 4, wherein the second mixture solution satisfies one or more of the following conditions:
(1) a concentration of the second complexant is 5 g/L to 120 g/L; and
(2) a mass ratio of the second complexant to the first precipitant is 1:(0.2 to 0.6).

8. The preparation method for the manganese iron phosphate precursor of claim 4, wherein a concentration of the second precipitant in the precipitant solution is 10 g/L to 120 g/L.

9. The preparation method for the manganese iron phosphate precursor of claim 4, wherein the buffer base solution satisfies one or more of the following conditions:
(1) a concentration of the third complexant is 2 g/L to 10 g/L;
(2) a concentration of the third precipitant is 6 g/L to 80 g/L;
(3) a molar ratio of the third complexant to the third precipitant is 1:(1 to 8); and
(4) a pH value of the buffer base solution is 2 to 6.

10. The preparation method for the manganese iron phosphate precursor of any one of claims 4 to 9, wherein a volume ratio of the first mixture solution, the second mixture solution, the second mixture solution, and the buffer base solution is (1 to 3) : (2 to 9) : (2 to 9) : 1.

11. The preparation method for the manganese iron phosphate precursor of claim 10, satisfying one or more of the following conditions:
(1) the co-precipitation reaction is performed at a temperature of 50°C to 60°C for a time period of 2 h to 24 h; and
(2) the aging treatment is performed at a temperature of 50°C to 60°C for a time period of 1 h to 6 h.

12. A lithium manganese iron phosphate cathode material, represented by a formula of LiFeₓMn₁₋ₓPO₄/C, wherein 0<x<1, and wherein the lithium manganese iron phosphate cathode material has an average particle size of 1.5 µm to 1.7 µm, a D50 particle size of 1.5 µm to 1.7 µm, and a span of 1.9 to 2.3.

13. The lithium manganese iron phosphate cathode material of claim 12, satisfying one or more of the following conditions:
(1) the lithium manganese iron phosphate cathode material comprises a plurality of primary particles in an irregular spherical morphology;
(2) the lithium manganese iron phosphate cathode material has a compacted density of 2.0g/cm³ to 2.2g/cm³; and
(3) the lithium manganese iron phosphate cathode material has a specific surface area of 12m²/g to 23m²/g.

14. A cathode plate, comprising the lithium manganese iron phosphate cathode material of any one of claims 12 to 13.

15. A secondary battery, comprising the cathode plate of claim 14.
